# DEMANDE DE BREVET EUROPEEN

(11) **EP 3 789 322 A1**
(43) Date de publication de la demande: **10.03.2021**
(21) Numéro de dépôt: 20192977.5
(22) Date de dépôt: 26.08.2020
(51) Int. Cl.: B65G 47/54

(54) **TABLE DE TRANSFERT**

(30) Priorité: 05.09.2019 FR 1909785
(71) Demandeur: CIUCH SOLUTIONS, 59200 Tourcoing (FR)
(72) Inventeur: KUBIAK, Didier, 59200 TOURCOING (FR); LAMBRECHTS, Fabien, 59200 TOURCOING (FR)
(74) Mandataire: Prouvez, Julien

(57) **Abrégé**

Table de transfert (1) comprenant :
- un châssis (10);
- un tiroir (30) monté pour passer sélectivement d'une première position à une deuxième position sous l'effet d'un premier actionneur (90) ;
- un premier module (50) comportant des moyens principaux de convoyage selon la direction principale de convoyage (4) ;
- un deuxième module (70) comportant des moyens auxiliaires de convoyage selon la direction auxiliaire de convoyage (5) ;
- des premiers moyens de liaison du tiroir (10) au premier module (50);
les premiers moyens de liaison étant agencés de manière à ce que le passage du tiroir (10) depuis sa première position à sa deuxième position provoque un coulissement du premier module (50) relativement au deuxième module (70),
dans laquelle le premier actionneur (90) comprend un système bielle-manivelle.

## Description

### DOMAINE DE L'INVENTION

L'invention concerne le domaine du convoyage de colis et plus particulièrement l'orientation des colis au sein d'un système de routage et distribution de colis.

### ARRIERE PLAN DE L'INVENTION

Classiquement, un système de routage de colis comprend un convoyeur principal chargé de convoyer des colis dans une direction principale de convoyage. Un tel convoyeur comprend des moyens principaux de convoyage qui peuvent être du type à rouleaux motorisés, à galets ou à courroies. Lorsque l'on souhaite orienter un colis déterminé depuis la direction principale vers une direction auxiliaire, une palette d'orientation est déplacée en travers de la direction principale et dirige le colis dans la direction auxiliaire. Ce type de dispositif est peu adapté aux colis de masse importante et/ou circulant à haute vitesse. Enfin, le transfert vers une direction auxiliaire orthogonale à la direction principale n'est pas possible avec un tel système.

### OBJET DE L'INVENTION

L'invention a pour objet d'améliorer l'orientation d'un colis depuis une direction principale de convoyage vers une direction auxiliaire de convoyage.

### RESUME DE L'INVENTION

A cet effet, on prévoit une table de transfert pour sélectivement orienter un produit vers une direction principale de convoyage ou une direction auxiliaire de convoyage. La table de transfert comprend un châssis, un tiroir monté à coulissement relativement au châssis selon une première direction de coulissement pour passer sélectivement d'une première position à une deuxième position sous l'effet d'un premier actionneur. Un premier module est monté à coulissement relativement au châssis selon une deuxième direction de coulissement. Le premier module comporte des moyens principaux de convoyage selon la direction principale de convoyage. Un deuxième module comporte des moyens auxiliaires de convoyage selon la direction auxiliaire de convoyage. La table de transfert comprend également des premiers moyens de liaison du tiroir au premier module qui sont agencés de manière à ce que le passage du tiroir depuis sa première position à sa deuxième position provoque un coulissement du premier module relativement au deuxième module selon un premier sens de la deuxième direction. Selon l'invention, le premier actionneur comprend un système bielle-manivelle.

On obtient ainsi une table de transfert dans laquelle le changement de direction de convoyage se fait en substituant des moyens de convoyage auxiliaires aux moyens principaux de convoyage. Les inventeurs ont constaté que l'utilisation d'un système bielle-manivelle permettait d'obtenir un changement de direction de convoyage particulièrement peu bruyant.

Les opérations de maintenance, et notamment la gestion des pièces de rechange, sont particulièrement facilitées lorsque le premier actionneur comprend un premier rouleau d'entraînement d'un premier arbre solidaire d'une bielle du système bielle manivelle.

Les bruits de fonctionnement sont encore réduits lorsque le premier rouleau d'entraînement est relié par une première courroie de transmission au premier arbre.

Les amplitudes de déplacement du premier module- et incidemment, la course du tiroir et l'encombrement de la table de transfert sont réduits lorsque le deuxième module est monté à coulissement relativement au châssis selon la deuxième direction de coulissement et qu'il est lié au tiroir par des deuxièmes moyens de liaison. Les deuxièmes moyens de liaison sont alors agencés de manière à ce que le passage du tiroir depuis sa première position à sa deuxième position provoque un coulissement du deuxième module selon un premier sens de la deuxième direction.

Les opérations de démontage et de remontage du premier module sur le châssis sont facilitées lorsque les premiers moyens de liaison du tiroir au premier module comprennent une première came et un premier suiveur et/ou que les deuxièmes moyens de liaison du tiroir au deuxième module comprennent la première came et un deuxième suiveur.

La table de transfert est particulièrement fiable lorsque les moyens principaux de convoyage comprennent au moins une deuxième courroie s'étendant sensiblement parallèlement à la direction principale de convoyage et/ou que les moyens auxiliaires de convoyage comprennent au moins un deuxième rouleau monté à rotation sur le deuxième module autour d'un axe de rotation s'étendant sensiblement parallèlement à la direction principale de convoyage.

L'encombrement d'un système de routage peut être fortement réduit lorsque la direction principale de convoyage est sensiblement orthogonale à la direction auxiliaire de convoyage.

L'invention concerne également un système de routage de colis comprenant une table de transfert selon l'invention.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence annexés, parmi lesquelles :
[Fig. 1] La figure 1 est une vue schématique en plan de dessus d'une table de transfert selon l'invention ;
[Fig. 2] La figure 1 est une vue schématique en perspective éclatée d'une table de transfert selon l'invention ;
[Fig. 3] La figure 3 est une vue schématique partielle en coupe longitudinale d'une table de transfert selon l'invention dans une première position ;
[Fig. 4] La figure 4 est une vue schématique partielle en coupe longitudinale d'une table de transfert selon l'invention dans une deuxième position ;
[Fig. 5] La figure 5 est une vue schématique partielle en perspective de la table de transfert de la figure 1 ;
[Fig. 6] La figure 6 est une vue schématique partielle en perspective d'un tiroir de la table de transfert de la figure 1 ;
[Fig. 7] La figure 7 est une vue schématique de côté du tiroir de la figure 6 ;
[Fig. 8] La figure 8 est une vue schématique en perspective d'un premier module de la table de transfert de la figure 1 ;
[Fig. 9] La figure 9 est une vue schématique de côté du premier module de la figure 8 ;
[Fig. 10] La figure 10 est une vue schématique en perspective d'un deuxième module de la table de transfert de la figure 1 ;
[Fig. 11] La figure 11 est une vue schématique de côté du deuxième module de la figure 10 ;
[Fig. 12] La figure 12 est une vue schématique en coupe selon le plan XII-XII de la table de transfert de la figure 1 dans une première position de tiroir ;
[Fig. 13] La figure 13 est une vue schématique en coupe selon le plan XIII-XIII de la table de transfert de la figure 1 dans une première position de tiroir ;
[Fig. 14] La figure 14 est une vue schématique en coupe selon le plan XII-XII de la table de transfert de la figure 1 dans une deuxième position de tiroir ;
[Fig. 15] La figure 15 est une vue schématique en coupe selon le plan XIII-XIII de la table de transfert de la figure 1 dans une deuxième position de tiroir ;
[Fig. 16] La figure 16 est une vue schématique en plan de dessus d'un système de routage de colis selon l'invention.

### DESCRIPTION DETAILLEE DE L'INVENTION

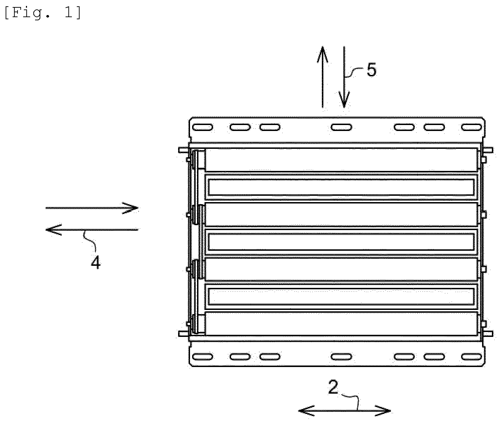

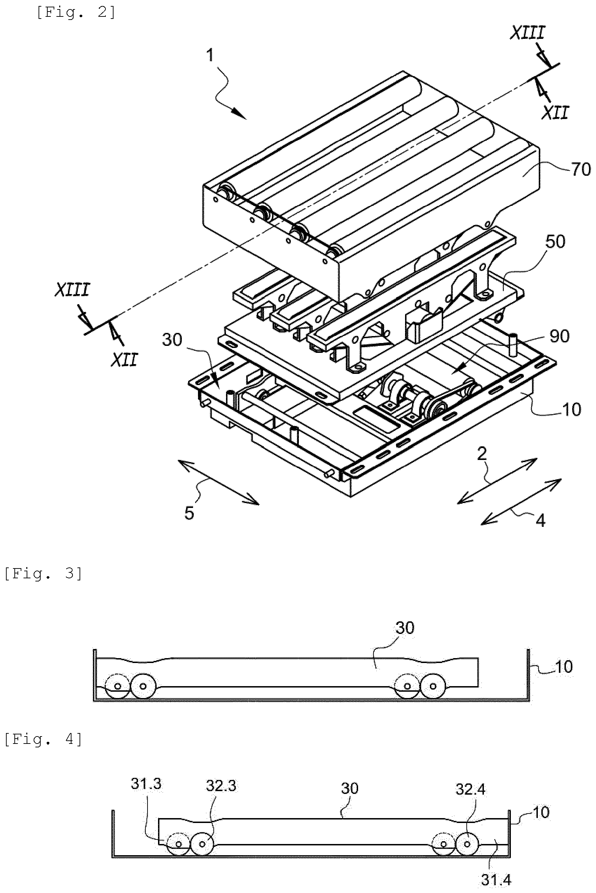

En référence aux figures 1 à 15, la table de transfert selon l'invention, et généralement désignée 1, comprend un châssis 10 sensiblement parallélépipédique, dans lequel un tiroir 30 est monté à coulissement relativement au châssis 10 selon une première direction 2 de coulissement, ici horizontale selon les représentations des figures 2 à 15. Un premier module 50 est également monté à coulissement relativement au châssis 10 selon une deuxième direction de coulissement 3. Un deuxième module 70 est lui aussi monté à coulissement relativement au châssis 10 selon la deuxième direction de coulissement 3.

Un premier actionneur 90 relie le châssis 10 au tiroir 30 pour faire passer le tiroir 30 sélectivement d'une première position (représentée en figure 3) à une deuxième position (représentée en figure 4).

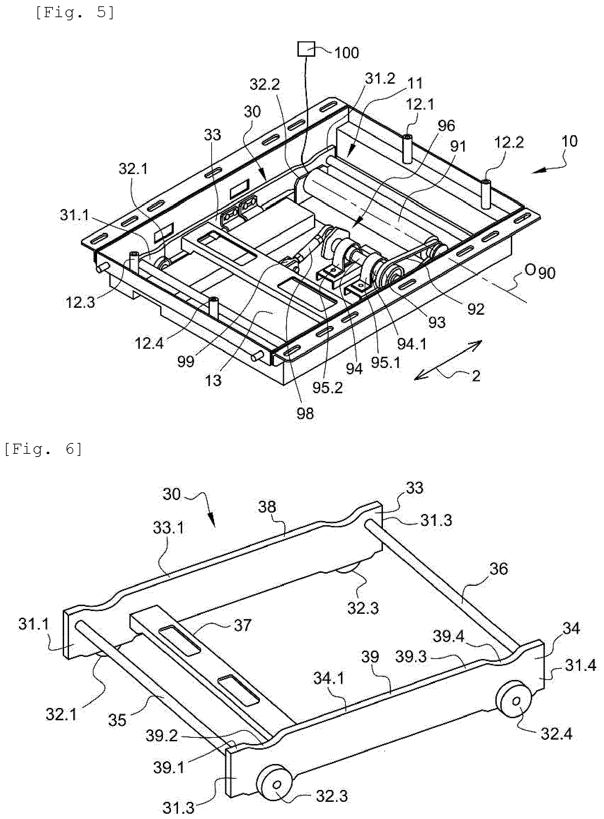

Comme visible en figures 5 et 6, le châssis 10 dispose d'une face supérieure 11 ouverte et comprend quatre colonnes 12.1 à 12.4 de guidage s'étendant verticalement (selon la représentation de la figure 5). Le tiroir 30 est sensiblement parallélépipédique et comprend à proximité de ses quatre sommets inférieurs 31.1 à 31.4 quatre roues 32.1 à 32.4 qui reposent sur un fond 13 du châssis 10. Le tiroir 30 comprend un premier flanc 33 et un deuxième flanc 34 reliés l'un à l'autre par une traverse avant 35, une traverse arrière 36 et une traverse intermédiaire 37. La face supérieure 33.1 du premier flanc 33 et la face supérieure 34.1 du deuxième flanc 34 sont identiques et définissent respectivement une première came 38 et une deuxième came 39.

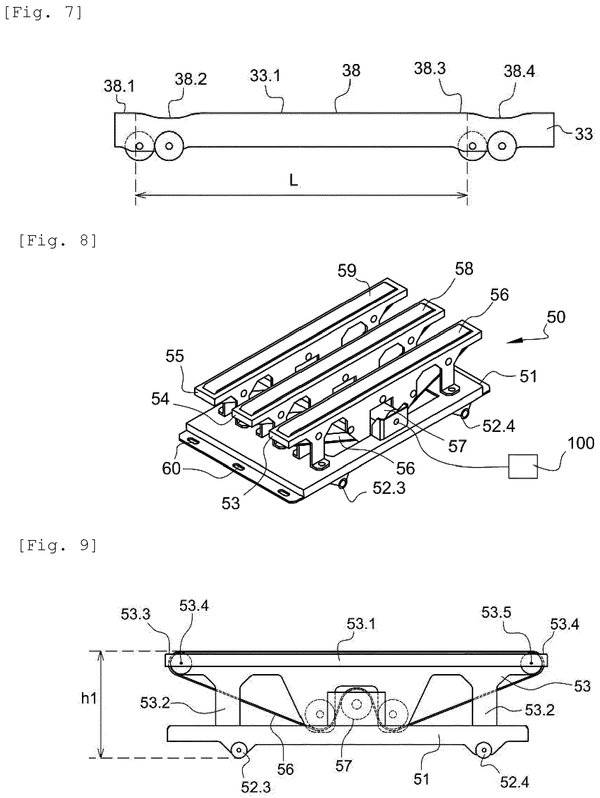

Comme visible en figure 7, la première came 38 comprend successivement un premier appui avant 38.1, un premier retrait avant 38.2, un premier appui arrière 38.3 et un premier retrait arrière 38.4. Le premier appui avant 38.1 et le premier appui arrière 38.3 sont situés au-dessus du premier retrait avant 38.2 et du premier retrait arrière 38.4 selon une direction -ici verticale- reliant la face inférieure et la face supérieure 33.1 du premier flanc 33. Le premier appui avant 38.1 est séparé du premier appui arrière 38.3 par une première distance L. La même première distance L s'étend entre le premier retrait avant 38.2 et le premier retrait arrière 38.4 La deuxième came 39, de manière homologue, comprend successivement un deuxième appui avant 39.1, un deuxième retrait avant 39.2, un deuxième appui arrière 39.3 et un deuxième retrait arrière 39.4.

Le premier actionneur 90 comprend un premier rouleau 91 monté à rotation sur le fond 13 du châssis 10 autour d'un axe O₉₀ sensiblement orthogonal à la direction 2. Une première courroie de transmission 92 relie le premier rouleau 91 à une poulie 93 solidaire d'une première extrémité 94.1 d'un premier arbre 94 d'entrainement. Le premier arbre 94 est monté à rotation sur le fond 13 du châssis 10 à l'aide d'un palier 95.1 et d'un palier 95.2 et comporte une deuxième extrémité 96 munie d'une manivelle 97 -ici un plateau. Une bielle 98 relie un maneton (non représenté) et un palier 99 solidaire de la traverse intermédiaire 37 pour constituer un système bielle 98-manivelle 97. Le premier rouleau 91 est relié à une unité de commande 100.

Comme visible en figures 8 et 9, le premier module 50 comprend une première embase 51 sensiblement rectangulaire pourvu d'un premier galet avant droit 52.1, un premier galet arrière droit 52.2, un premier galet avant gauche 52.3, un premier galet arrière gauche 52.4. Le premier galet avant droit 52.1 et le premier galet arrière droit 52.2 sont séparés l'un de l'autre par la première distance prédéterminée L. Le premier galet avant gauche 52.3 et le premier galet arrière gauche 52.4 sont séparés l'un de l'autre par la première distance prédéterminée L.

La première embase 51 reçoit un premier support 53 de deuxième courroie 56, un deuxième support 54 de troisième courroie 58 et un troisième support 55 de quatrième courroie 59 qui s'étendent selon la première direction 2 de coulissement. Le premier support 53 comprend un plateau supérieur 53.1 relié par des pieds 53.2 à la première embase 51. Une portion avant 53.3 du premier support 53 porte un deuxième arbre avant 53.4 et un deuxième arbre arrière 53.5 entre lesquelles s'étend la deuxième courroie 56. La deuxième courroie 56 coopère avec un rouleau motorisé 57 qui provoque un déplacement de la deuxième courroie 56 selon une direction parallèle à la première direction de coulissement. Le deuxième support 54 et le troisième support 55 sont identiques au premier support 53 et portent respectivement une troisième courroie 58 et une quatrième courroie 59 toutes deux entrainées par le rouleau motorisé 57. Le rouleau motorisé 57 est relié à l'unité de commande 100 et la première embase 51 comprend quatre perçages 60. Ainsi, un colis qui repose sur la deuxième courroie 56, la troisième courroie 58 et la quatrième courroie 59 est convoyé dans une direction principale 4 de convoyage.

Le deuxième module 70 comprend une deuxième embase 71 sensiblement parallélépipédique pourvue d'une deuxième face avant 72 et une deuxième face arrière 73 entre lesquelles s'étendent quatre deuxièmes rouleaux 74.1 à 74.4 montés à rotation autour d'un axe parallèle à la première direction 2.

Le premier deuxième rouleau 74.1 est un rouleau moteur relié au deuxième rouleau adjacent par une courroie 75.1. Les deuxièmes rouleaux sont reliés les uns aux autres par des systèmes de courroies. Ainsi, le premier deuxième rouleau 74.1 entraîne en rotation l'ensemble des deuxièmes rouleaux 74.2 à 74.4. Le premier rouleau deuxième rouleau 74.1 est relié à l'unité de commande 100.

Ainsi, un colis qui reposerait sur le premier deuxième rouleau 74.1 et les deuxièmes rouleaux 74.2 à 74.4 serait dirigé dans une direction auxiliaire 5 de convoyage sensiblement orthogonale à la direction principale 4 de convoyage. Le premier deuxième rouleau 74.1 est relié à l'unité de commande 100.

Une face longitudinale droite 76 et une face longitudinale gauche 77 relient la face avant 72 et la face arrière 73 de l'embase 71. L'arrête inférieure 76.1 de la face longitudinale droite est pourvue d'un deuxième galet avant 78.1 droit et un deuxième galet arrière 78.2 droit. L'arrête inférieure 77.1 de la face longitudinale gauche est pourvue d'un deuxième galet avant 78.3 gauche et d'un deuxième galet arrière 78.4 gauche. Les deuxièmes galets de roulement 78.1 et 78.2 sont séparés l'un de l'autre par la première distance prédéterminée L. Les deuxièmes galets de roulement 78.3 et 78.4 sont séparés l'un de l'autre par la première distance prédéterminée L.

La première hauteur h1 séparant le point de roulement des premiers galets 52.1 à 52.4 de la surface de la deuxième courroie 56, la troisième courroie 58 et la quatrième courroie 59 est égale à la deuxième hauteur h2 séparant le point de roulement des deuxièmes galets 78.1 à 78.4 de la surface de roulement des deuxièmes rouleaux 74.2, 74.3, 74.4.

Une fois, le tiroir 30, le premier module 50 et le deuxième module 70 montés sur le châssis 10, les premiers galets 52.1, 52.2 ainsi que les deuxièmes galets 78.1 et 78.2 sont au contact de la première came 38. Les premiers galets 52.3, 52.4 ainsi que les deuxièmes galets 78.3 et 78.4 sont quant à eux au contact de la deuxième came 39.

Les perçages 60 de la première embase 51 reçoivent chacun à coulissement une colonne 12.1 à 12.4.

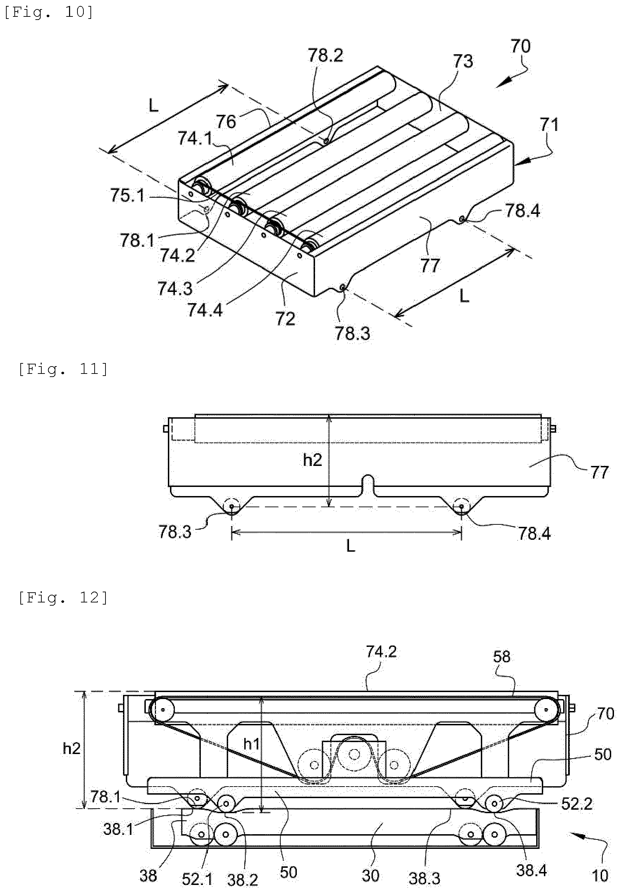

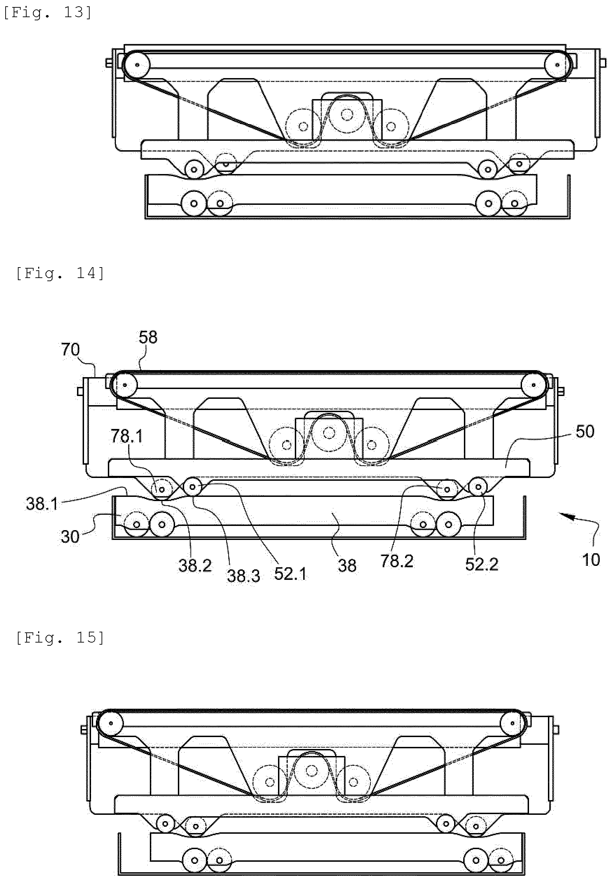

Comme visible en figure 12 et 13, lorsque le tiroir 30 est dans sa deuxième position, le deuxième galet 78.1 avant droit et le deuxième galet 78.2 arrière droit se trouvent respectivement sur le premier appui avant 38.1 et le premier appui arrière 38.3. Le premier galet 52.1 avant droit repose sur le premier retrait avant droit 38.2, le premier galet 52.2 arrière droit repose sur le premier retrait arrière droit 38.4. La première hauteur h1 étant égale à la deuxième hauteur h2, la surface de roulement des deuxièmes rouleaux 74.2, 74.3, 74.4 se retrouve au-dessus de la deuxième courroie 56, troisième courroie 58, quatrième courroie 59. Ainsi, un colis qui se présente sur la table de transfert 1 lorsque le tiroir 30 est dans sa deuxième position est convoyé selon la direction auxiliaire 5 de convoyage.

A contrario, lorsque le tiroir 30 est dans sa première position (figure 14), le deuxième galet 78.1 avant droit et le deuxième galet 78.2 arrière droit se trouvent respectivement sur le premier retrait avant droit 38.2 et sur le premier retrait arrière droit 38.4. Le premier galet 52.1 avant droit repose sur le premier appui avant 38.1, le premier galet 52.2 arrière droit repose sur le deuxième appui arrière 38.3. La première hauteur h1 étant égale à la deuxième hauteur h2, la deuxième courroie 56, troisième courroie 58, quatrième courroie 59 se retrouvent au-dessus de la surface de roulement des deuxièmes rouleaux 74.1, 74.2, 74.3, 74.4. Ainsi, un colis qui se présente sur la table de transfert 1 lorsque le tiroir 30 est dans sa première position est convoyé selon la direction principale 4 de convoyage.

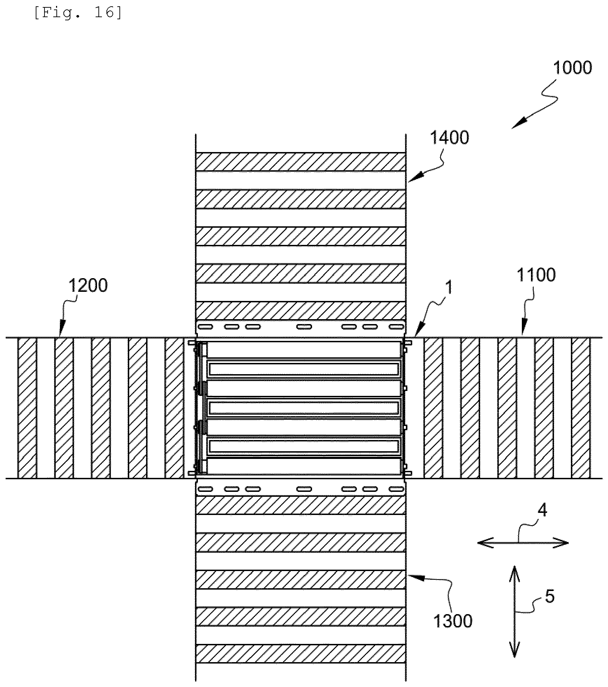

En fonctionnement, la table de transfert 1 est intégrée à un système de routage de colis 1000 comprenant un premier convoyeur à rouleaux 1100 d'entrée qui convoie des colis selon un premier sens (ici vers la gauche selon la représentation de la figure 16) de la direction principale 4 vers la table de transfert 1. Un second convoyeur à rouleaux 1200 de sortie qui convoie des colis en sortie de la table de transfert 1 dans le premier sens de la direction principale de convoyage 4. Le système de routage 1000 comprend également un troisième convoyeur à rouleaux 1300 gauche et un quatrième convoyeur à rouleaux 1400 droit qui convoient des colis selon un premier sens de la direction auxiliaire de convoyage 5 (ici vers le bas selon la représentation de la figure 16) pour le troisième convoyeur 1300 ou selon un deuxième sens de la direction auxiliaire de convoyage 5 (ici vers le haut selon la représentation de la figure 16).

L'unité de commande 100 commande la mise en route des deuxièmes rouleaux 74.4 à 74.3 et du rouleau motorisé 57. Lorsqu'un colis est amené par le premier convoyeur 1100 sur la table de transfert 1, et qu'il est destiné à être dirigé vers le deuxième convoyeur à rouleaux 1200, l'unité de commande 100 commande le premier rouleau 91 pour qu'il fasse passer le tiroir 30 dans sa première position (figures 3 et 14). Dans cette position, le colis est convoyé par la deuxième courroie 56, troisième courroie 58 et quatrième 59 selon un premier sens de la direction principale 4 de convoyage depuis le premier convoyeur 1100 vers le deuxième convoyeur 1200.

Lorsqu'un colis est amené par le premier convoyeur 1100 sur la table de transfert 1, et qu'il est destiné à être dirigé vers le troisième convoyeur 1300, l'unité de commande 100 commande le premier rouleau 91 pour qu'il fasse passer le tiroir 30 dans sa deuxième position (figure 4 et 12). L'unité de commande 100 commande également une rotation des deuxièmes rouleaux 74.1-74.4 dans un sens horaire selon la représentation de la figure 10. Dans cette deuxième position, le colis est convoyé par les deuxièmes rouleaux 74.1 à 74.4 selon un premier sens - ici vers le bas selon la représentation de la figure 16-de la direction auxiliaire 5 de convoyage depuis le premier convoyeur 1100 vers le troisième convoyeur 1300.

Lorsqu'un colis est amené par le premier convoyeur 1100 sur la table de transfert 1, et qu'il est destiné à être dirigé vers le deuxième convoyeur 1200, l'unité de commande 100 commande le premier rouleau 91 pour qu'il fasse passer le tiroir 30 dans sa deuxième position (figure 4 et 12). L'unité de commande 100 commande également une rotation des deuxièmes rouleaux 74.1-74.4 dans un sens antihoraire selon la représentation de la figure 10. Dans cette deuxième position, le colis est convoyé par les deuxièmes rouleaux 74.1 à 74.4 selon un deuxième sens - ici vers le haut selon la représentation de la figure 16-de la direction auxiliaire 5 de convoyage depuis le premier convoyeur 1100 vers le troisième convoyeur 1300.

Bien entendu, l'invention n'est pas limitée aux modes de réalisation décrits mais englobe toute variante entrant dans le champ de l'invention telle que définie par les revendications.

En particulier,
- bien qu'ici les colonnes de guidage s'étendent verticalement pour guider le coulissement du premier module selon une direction verticale, l'invention s'applique également à d'autres deuxième direction de coulissement, par exemple à quarante-cinq degrés par rapport à l'horizontale, horizontalement ou selon une orientation quelconque ;
- bien qu'ici le tiroir comprenne une première et deuxième cames identiques, l'invention s'applique également à d'autres configurations de cames comme par exemple un tiroir comprenant une unique came ou plus de deux ;
- bien qu'ici la manivelle soit un plateau, l'invention s'applique également à d'autres types de manivelles comme par exemple une manivelle sous la forme d'une tige ;
- bien qu'ici le premier module comprenne quatre galets de roulement coopérant avec la première et la deuxième came, l'invention s'applique également à d'autres types de premiers moyens de liaison du tiroir au premier module comme par exemple un nombre différent de galets ou des patins. Le premier suiveur de came peut être également une bille ou un doigt coopérant avec une rainure ;
- bien qu'ici le premier module comprenne trois courroies de convoyage, l'invention s'applique également à d'autres moyens principaux de convoyage selon la direction principale comme par exemple un nombre différent de courroies, des rouleaux motorisés, des galets ou billes motorisés, des chaines, des plats à lever alternative ;
- bien qu'ici le deuxième module comprenne quatre courroies de convoyage, l'invention s'applique également à d'autres moyens auxiliaires de convoyage selon la direction auxiliaire comme par exemple un nombre différent de rouleaux, des courroies motorisées, des galets ou billes motorisés, des chaines, des plats à lever alternative ;
- bien qu'ici la direction auxiliaire de convoyage soit sensiblement orthogonale à la direction principale de convoyage, l'invention s'applique également à d'autres orientations de la direction auxiliaire de convoyage relativement à la direction principale comme par exemple une orientation à quarante-cinq degrés ou quelconque ;
- bien qu'ici le deuxième module comprenne quatre galets de roulement coopérant avec la première et la deuxième came, l'invention s'applique également à d'autres types de deuxièmes moyens de liaison du tiroir au deuxième module comme par exemple un nombre différent de galets ou des patins. Le deuxième suiveur de came peut être également une bille ou un doigt coopérant avec une rainure ;
- bien qu'ici la table de transfert soit intégrée à un système de routage comprenant des convoyeurs à rouleaux, l'invention s'applique également à des systèmes de routage comprenant d'autres types de convoyeurs comme par exemple des convoyeurs à rouleaux, à courroies motorisées, à galets ou billes motorisés, des convoyeurs à chaines ou à plats à lever alternative voire une pluralité de convoyeurs de types différents ;
- bien qu'ici le premier module et le deuxième module changent de position à chaque changement de position du tiroir, l'invention s'applique également à un premier module fixe et un deuxième module qui change de position relativement au premier module ;
- bien qu'ici le premier actionneur comprenne un premier rouleau motorisé, l'invention s'applique également à d'autres types de motorisation comme par exemple un motoréducteur électrique, un moteur pas-à-pas, un moteur rotatif pneumatique ou hydraulique, un actionneur linéaire relié par un système bielle-manivelle au premier arbre.

## Revendications

1. Table de transfert (1) pour sélectivement orienter un produit vers une direction principale de convoyage (4) ou une direction auxiliaire de convoyage (5),
la table de transfert (1) comprenant :
- un châssis (10) ;
- un tiroir (30) monté à coulissement relativement au châssis (10) selon une première direction de coulissement (2) pour passer sélectivement d'une première position à une deuxième position sous l'effet d'un premier actionneur (90) ;
- un premier module (50) monté à coulissement relativement au châssis (10) selon une deuxième direction de coulissement, le premier module (50) comportant des moyens principaux de convoyage (56, 58, 59) selon la direction principale de convoyage (4) ;
- un deuxième module (70) comportant des moyens auxiliaires de convoyage (74.1-74.4) selon la direction auxiliaire de convoyage (5) ;
- des premiers moyens de liaison (38, 39, 78.1-78.4) du tiroir (30) au premier module (50);
les premiers moyens de liaison (38, 39, 78.1-78.4) étant agencés de manière à ce que le passage du tiroir (30) depuis sa première position à sa deuxième position provoque un coulissement du premier module (50) relativement au deuxième module (70) selon un premier sens de la deuxième direction ;
dans laquelle le premier actionneur (90) comprend un système bielle-manivelle (97, 98).

2. Table de transfert (1) selon la revendication 1, dans lequel le premier actionneur (90) comprend un premier rouleau (91) d'entraînement d'un premier arbre (94) solidaire d'une bielle (98) du système bielle manivelle (97, 98).

3. Table de transfert (1) selon la revendication 2, dans lequel le premier rouleau (91) d'entraînement est relié par une première courroie (92) de transmission au premier arbre (94).

4. Table de transfert (1) selon l'une quelconque des revendications précédentes, dans laquelle les premiers moyens de liaison (38, 39, 52.3-52.4) du tiroir (30) au premier module (50) comprennent une première came (38) et un premier suiveur (52.1).

5. Table de transfert (1) selon l'une des revendications précédentes, dans laquelle le deuxième module (70) est monté à coulissement relativement au châssis (10) selon la deuxième direction de coulissement et est lié au tiroir (30) par des deuxièmes moyens de liaison (38, 39, 78.1-78.4) ;
les deuxièmes moyens de liaison (38, 39, 78.1-78.4) étant agencés de manière à ce que le passage du tiroir (30) depuis sa première position à sa deuxième position provoque un coulissement du deuxième module (70) relativement au premier module (50) selon un premier sens de la deuxième direction.

6. Table de transfert (1) selon l'une quelconque des revendications précédentes dans laquelle, les deuxièmes moyens de liaison (38, 39, 78.1-78.4) du tiroir (30) au deuxième module (70) comprennent la première came (38) et un deuxième suiveur (78.1-78.4).

7. Table de transfert (1) selon l'une quelconque des revendications précédentes dans laquelle, les moyens principaux de convoyage comprennent au moins une deuxième courroie (56, 58, 59) s'étendant sensiblement parallèlement à la direction principale de convoyage (4).

8. Table de transfert (1) selon l'une quelconque des revendications précédentes dans laquelle, les moyens auxiliaires de convoyage comprennent au moins un deuxième rouleau (74.1-74.4) monté à rotation sur le deuxième module (70) autour d'un axe de rotation s'étendant sensiblement parallèlement à la direction principale de convoyage (4).

9. Table de transfert (1) selon l'une quelconque des revendications précédentes, dans laquelle la direction principale de convoyage (4) est sensiblement orthogonale à la direction auxiliaire de convoyage (5).

10. Système de routage de colis (1000) comprenant une table de transfert (1) selon l'une quelconque des revendications précédentes.
